Europäisches Patentamt

European Patent Office

Office européen des brevets

(19)

(11) Numéro de publication: **0 204 191 B1**

(12) **FASCICULE DE BREVET EUROPEEN**

(45) Date de publication de fascicule du brevet:
21.08.91

(51) Int. Cl.⁵: **H04B 7/185**

(21) Numéro de dépôt: 86106614.0

(22) Date de dépôt: 15.05.86

(54) **Procédé et dispositif de telecommunications par satellite en acces multiple a repartition dans le temps.**

(30) Priorité: 20.05.85 FR 8507550

(43) Date de publication de la demande:
10.12.86 Bulletin 86/50

(45) Mention de la délivrance du brevet:
21.08.91 Bulletin 91/34

(84) Etats contractants désignés:
DE FR GB IT NL

(56) Documents cités:
DE-A- 3 313 841

GLOBECOM '82, IEEE Global Telecommunications Conference, Conference Record,
vol. 1, Miami, 29 novembre - 2 décembre
1982, pages A2.3.1-A2.3.8, IEEE, New York,
US; SHUJI TASAKA et al.: "Stability and performance of a packet reservation system for
satellite broadcast channels"

PATENTS ABSTRACTS OF JAPAN, vol. 8, no.
70 (E-235)[1507], 3 avril 1984; & JP - A - 58
218 249 (YUUSEISHIYOU DENPA KENKYOS-
HO (JAPAN)) 19-12-1983

(73) Titulaire: **ALCATEL ESPACE**
**11, avenue Dubonnet**
**F-92407 Courbevoie Cédex(FR)**

(72) Inventeur: **Fontanes, Sylvain**
**34 Avenue Guy de Maupassant**
**F-78400 Chatou(FR)**

(74) Mandataire: **Weinmiller, Jürgen**
**Lennéstrasse 9 Postfach 24**
**W-8133 Feldafing(DE)**

## Description

La présente invention a pour objet un procédé nouveau de télécommunications par satellite utilisant l'Accès Multiple à Répartition dans le temps, ou A.M.R.T. (T.D.M.A. en anglais), et avec assignation à la demande ("demand assignment" en anglais).

En matière de dispositifs de télécommunications par satellite utilisant l'A.M.R.T., on connaît actuellement quelques types de systèmes dont quelques uns sont déjà exploités depuis plusieurs années, tel que par exemple aux Etats-Unis le système SBS.

Les autres systèmes, qui sont depuis peu de temps en exploitation, sont en particulier en France le système TELECOM 1, qui est un système intraentreprises, et au plan mondial, pour le téléphone et les transmissions de données à l'échelle internationale, le système INTELSAT utilisant l'A.M.R.T.

Parmi tous ces systèmes, certains, comme c'est le cas par exemple pour le satellite TELECOM 1, utilisent, comme il est décrit par exemple dans l'article de J.C. BOUSQUET "Time division multiple access system with demand assignment for intra company network using the Satellite Telecom 1" paru dans "5th International Conférence ou digital Satellite telecommunication, Genoa, 23-26 March 1981" pages 11 à 18, un dispositif dit "d'assignation à la demande" communication par communication.

Le rôle d'un dispositif d'assignation à la demande est de définir, au moment où arrive un appel, l'endroit exact où doit se placer dans la trame la communication nouvelle qui est à établir, cette communication étant transmise au moyen de paquet isochrone ("burst" en anglais) dont la longueur dépend du débit à transmettre, du débit AMRT et de la longueur de la trame et qui se retrouve, s'il n'y a pas de réarrangement, toujours au même emplacement temporel dans la trame. Un tel dispositif doit donc être capable d'indiquer dans quel paquet de données, ou "burst", la communication nouvelle doit être insérée, à quelle position dans ce paquet, et si, pour l'établir, il y a lieu de modifier ce paquet, c'est-à-dire en général de l'allonger, ou bien, s'il n'existe dans la trame aucun paquet déjà créé, où peut être inserée cette communication, le dispositif devant alors être capable de donner au réseau toutes les indications nécessaires pour la création d'un nouveau paquet en conséquence.

Dans le cas où la trame est pratiquement vide, il n'y a aucun problème pour placer un nouveau paquet. Par contre, dans le cas fréquent où la trame est déjà occupée par un relativement grand nombre d'autres paquets, il faut y trouver la place en dimensions suffisante pour placer la communication nouvelle, ce qui suppose alors que l'on fasse non seulement l'opération de création du nouveau paquet, mais en plus que l'on déplace dans la trame un certain nombre d'autres paquets pour venir insérer ce nouveau paquet.

Or, par définition de l'A.M.R.T., chaque paquet dans une même trame est émis par une station différente. Si l'on veut, comme c'est le cas pour TELECOM 1 qui utilise un dispositif d'assignation à la demande, dégager une place suffisante dans la trame pour y créer un nouveau paquet, il faut alors transmettre un certain nombre d'informations à un certain nombre de stations, ce qui suppose un réseau assez complexe.

Le système d'assignation à la demande dont il est question ici ne s'intéresse pas au trafic de donnée bas débit justifiable de la transmission et de la commutation par paquet non assujetti à l'isochronisme (trafic dit "bursty" en anglais) le paquet contenant toute les informations de routage. Un certain nombre de systèmes sont connu = ALOHA - SLOTTED ALOHA - pour lesquels il y a prise aléatoire d'un canal de transmission avec, s'il y a collision, répétition complète des informations à transmettre.

L'invention concerne, au contraire, des communications établies en appel par appel pour lesquelles, comme c'est le cas en téléphonie, lors de l'arrivée d'une demande, on définit toutes les caractéristiques du support de la communication (place et dimensions des paquets AMRT), lorsque l'on est sûr que ces informations sont connues de toutes les stations concernées, les paquets sont émis sans risque de collision et lorsque la demande de libération de la communication parvient, il y a interruption de la transmission des paquets correspondants.

Un premier but de l'invention est de proposer un procédé, et un dispositif, d'assignation à la demande qui ne nécessite pratiquement pas de réarrangements des paquets dans la trame, de façon à simplifier considérablement le système.

Par ailleurs, la complexité de ce genre de système classique d'assignation à la demande, qui est déjà importante, mais pas insurmontable, lorsqu'il s'agit de transmettre des voies téléphoniques à 64 kilobits/sec par exemple, qui occupent relativement peu de place dans une trame, s'accroît considérablement pour devenir pratiquement inextricable lorsque l'on veut insérer dans la trame des voies de vidéotélécommunications, télévision ou visio-conférences par exemple, dont le débit peut par exemple varier entre 2 mégabits/sec. et 30 mégabits/sec..

Or, la transmission par satellite des canaux de télévision, et plus généralement la transmission d'images sous toutes ses formes, correspond à un fort besoin actuel. Qu'il s'agisse de transmissions internationales d'images télévisées ou de visioconférences dans une même région ou interrégionales, une croissance importante du trafic correspondant est à prévoir dans les vingt prochaines années.

Un autre but de l'invention est donc de proposer un procédé, et un dispositif, d'assignation à la demande qui permet d'insérer, par des moyens simples à mettre en oeuvre, des voies de vidéotélécommunications dans une trame existante.

Parmi les documents de l'art antérieur on peut citer :

- une demande de brevet numéro DE-A-3 313 841 qui décrit un système de transmission AMRT dans lequel plusieurs stations sont en relation par une voie commune et émettent périodiquement leurs informations sous forme de rafales ("burst" en allemand), une trame à périodicité prédéterminée étant définie pour éviter les chevauchements de rafales. Chaque station se trouvant en situation d'accès communique à toutes les autres stations se trouvant dans la même situation les places qu'elle occupe dans la trame, par une rafale émise constamment et, au vu des informations correspondantes reçues des autres stations, détermine les places libres dans la trame pour envoyer ses informations.

- un article paru dans GLOBECOM '82 (IEEE Global Telecommunications Conference, Conference Record, vol. 1, Miami, 29 novembre - 2 décembre 1982, pages A2.3.1-A2.3.8, IEEE, New-York) de SHUJI TASAKA et al. intitulé "Stability and performances of a packet reservation system for satelite broadcast channels" qui décrit le comportement dynamique d'un système de réservation de paquets ("packet" en anglais) pour des canaux de diffusion par satellite. Chaque utilisateur émet un seul message à la fois, chaque message comportant un groupe de paquets avec une distribution de probabilité générale par taille de groupe. Un tel système de réservation possède une structure de trame fixe. Le canal est divisé en fenêtres de temps dont la durée est égale au temps de transmission d'un paquet de données ("data packets"). Les fenêtres sont organisées en trames à F fenêtres : chaque trame comprenant une "sous-trame" de réservation avec K fenêtres et une "sous-trame" de données avec L fenêtres. Chaque fenêtre dans la sous-trame de réservation est subdivisée en V "minifenêtres". Quand un utilisateur génère un message à paquets ou à "multipaquets", il transmet un paquet de réservation qui contient le nombre de fenêtres de données demandées. Si le paquet de réservation est transmis avec succès, il est reçu par tous les utilisateurs du fait de la nature "diffusion" du canal. Ainsi il y a une "fin" ("queue" en anglais) commune pour tous les utilisateurs.

L'invention a donc pour objet un procédé de télécommunications par satellite en accès multiple à répartition dans le temps (AMRT) du type utilisant l'assignation à la demande, communication par communication, pour toute nouvelle communication à établir ou à libérer, le débit à transmettre étant variable et connu du système pour chaque communication, caractérisé en ce que, la trame (AMRT) est formée d'au moins une trame élémentaire décomposée en N intervalles de temps égaux et de durée fixe, chacun desdits intervalles étant dimensionné pour transmettre, aux intervalles de garde près, le canal de communication à plus bas débit, un intervalle de temps étant affecté à la transmission des canaux de service, et en ce que :

- chaque station de trafic met continuellement à jour la liste des états des intervalles de temps à chaque message reçu sur le canal de signalisation, de manière à connaître de manière précise les intervalles de temps libres à tout instant

- lorsqu'une première station de trafic reçoit une demande de nouvelle communication en provenance d'un usager, elle émet vers les autres stations un message d'indication d'adresse contenant :

  . les caractéristiques de la communication ;
  . la désignation des trames et des numéros d'intervalles de temps disponibles qu'elle entend attribuer ;

- elle attend la réception de son propre message, qui sert d'accusé de réception pour l'ensemble des stations impliquées :

  . si ce message est reçu sans ambiguité et sans qu'un autre message émis par une autre station se soit intercalé, l'attribution des intervalles de temps est confirmé et la communication est établie ;

  . si un autre message s'intercale avant sa réception, celui-ci a la priorité et le message de la première station doit être modifié avant réexpédition

- dans le cas où les ressources ne permettent plus l'établissement de la communication demandée, le message d'indication d'adresse correspondant doit être annulé ou retardé

- dans le cas positif où la communication demandée est établie, on place chronologiquement les paquets à émettre à l'intérieur des intervalles de temps disponibles pour qu'ils soient correctement acheminés.

L'invention sera mieux comprise à l'aide de la description suivante d'un exemple préférentiel de réalisation, en référence aux dessins annexés dans lesquels :

- la figure 1 représente une trame A.M.R.T. utilisée dans le dispositif d'assignation à la demande de l'invention,
- la figure 2 représente schématiquement la structure d'un paquet de référence utilisé dans le dispositif de l'invention,
- la figure 3 représente schématiquement la structure d'un paquet de signalisation et synchronisation utilisé dans le dispositif de l'invention,
- la figure 4 représente schématiquement la structure d'un paquet de trafic à bas débit transmis par le dispositif de l'invention,
- la figure 5 représente schématiquement la structure d'un paquet de trafic à moyen et haut débit transmis par le dispositif de l'invention,
- la figure 6 représente schématiquement la structure de la multitrame A.M.R.T. incorporant la trame de la figure 1,
- la figure 7 est un dessin illustratif du dispositif de télécommunications par satellite géostationnaire de l'invention,
- la figure 8 est une représentation par schémas-blocs d'un mode de réalisation pratique d'une station de trafic équipant le dispositif de l'invention.

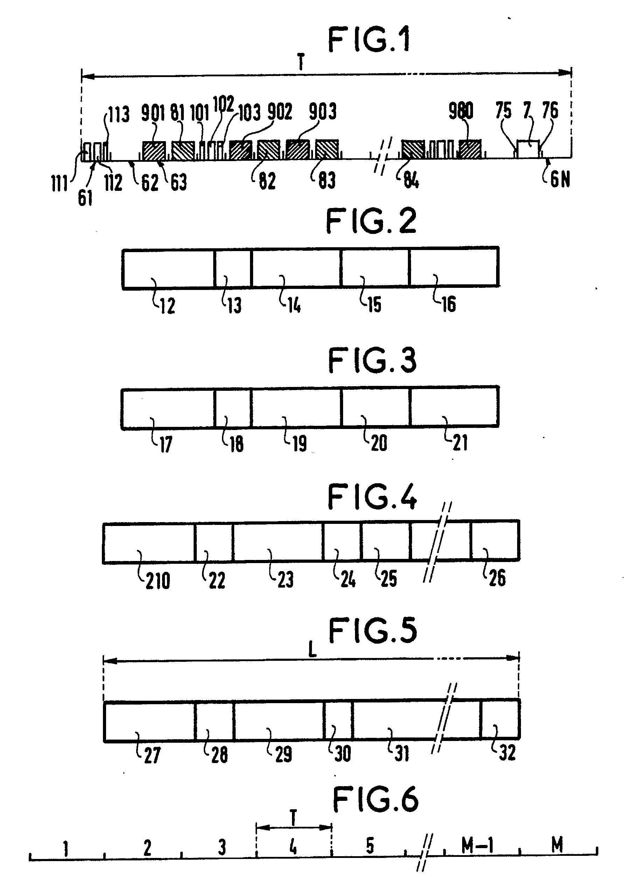

En se reportant tout d'abord à la figure 1, il y est représenté une trame, d'une durée T de 20 millisecondes par exemple, utilisée pour le procédé et dans le dispositif de télécommunications par satellite en A.M.R.T. avec assignation à la demande selon l'invention. Comme représenté sur les dessins, la trame de la figure 1 est par exemple la quatrième trame d'une multitrame, représenté sur la figure 6, comportant M trames (1, 2, 3, 4, 5, ..., M-1, M).

Conformément à un premier aspect de l'invention, chaque trame, telle que la trame de la figure 1, est décomposée en N intervalles de temps (61, 62, 63,..., 6N) égaux et de durée fixe, chaque intervalle de temps permettant au moins de transmettre le canal de plus bas débit.

Conformément à un second aspect de l'invention, chacun desdits intervalles de temps est dimentionné pour transmettre, aux intervalles de garde près, le canal de vidéocommunications à plus bas débit, par exemple le canal de visioconférence de plus basse qualité, à 384 kilobits par seconde selon les normalisations en cours. Par exemple, le paquet de trafic 7 sur la figure 1, qui remplit, avec les deux intervalles de garde (75, 76) destinés classiquement à compenser les variations en position du satellite, l'avant-dernier intervalle de temps, est un paquet transmettant un seul canal de visioconférence à 384 kilobits par seconde.

Selon un autre aspect de l'invention, chaque canal de vidéocommunications qui correspond à un débit supérieur au débit minimal (ici 384 kilobits/sec.) est partagé, à l'intérieur d'une même trame, en plusieurs paquets répartis dans la trame et transmettant chacun une partie de l'information de ce canal, les parties se succédant en ordre chronologique.

Sur la figure 1 par exemple, les quatre paquets 81, 82, 83 et 84 transmettent, réparties chronologiquement dans ces quatre paquets, les informations d'un canal de visioconférence à 1,5 mégabits/sec, tandis que les quatre-vingt paquets 901, 902, 903,..., 980 transmettent un canal de télévision à 30 mégabits par seconde.

Par ailleurs, et de manière particulièrement avantageuse pour simplifier au maximum le processus d'assignation à la demande, chaque paquet de trafic (81, 901, 7,...) correspondant à la transmission de tout ou partie d'un canal de vidéocommunications, à une longueur fixe et identique pour tous ces paquets. Dans notre exemple, cette longueur est donc égale à celle du paquet 7 transmettant le signal de visioconférence à plus bas débit.

Pour la transmission de canaux à bas débits, tels que des canaux téléphoniques à 32, 64, ou 128 kilobits/sec., on pourra aisément transmettre dans un même paquet plusieurs canaux en provenance d'une même station, et placer plusieurs de ces paquets dans un même intervalle de temps de la trame de la figure 1. Par exemple, l'intervalle de temps 65 comporte trois paquets 101, 102 et 103 transmettant respectivement des canaux à 64 kilobits/sec., 128 kilobits/sec., 64 kilobits/sec., en provenance de trois stations de trafic différentes.

Enfin, l'intervalle de temps 61 est affecté à la transmission de canaux de service et comporte par exemple deux paquets de référence 111 et 112 et un paquet de signalisation 113.

Avec l'organisation, selon l'invention, de la trame A.M.R.T. selon celle de la figure 1 qui vient d'être décrite, l'assignation à la demande d'une communication peut avoir lieu de façon directe, sans déplacer comme antérieurement des paquets dans la trame, en tenant compte uniquement et simplement des intervalles de temps disponibles.

Si l'on désire par exemple établir une nouvelle communication vidéo, il suffit, avec le procédé de l'invention, de regarder la liste des intervalles de temps disponibles dans la trame A.M.R.T. et d'indiquer à la station qui est concernée par l'émission des paquets les numéros de ces intervalles de temps. Ladite station n'a alors plus qu'à placer ces paquets chronologiquement à l'intérieur de ces intervalles de temps pour qu'ils soient correctement acheminés.

Par ailleurs, on a vu que les paquets correspondant aux transmissions vidéo ont avantageusement une longueur fixe, ce qui permet de simplifier encore plus le système d'assignation à la demande en évitant d'avoir, pour chaque intervalle de temps, a redéfinir à chaque station le début et la longueur du paquet à mettre dans celui-ci. Lorsque la station a un intervalle de temps alloué, elle émet, s'il s'agit d'une transmission vidéo, directement le paquet correspondant. Le débit correspondant n'étant pas nécessairement ajusté de façon précise à cette longueur, on peut alors ajuster la partie utile vidéo transmise en fonction du débit réel reçu dans la station.

La figure 2 représente un paquet de référence, tel que le paquet 111 ou le paquet 112, transmis par le dispositif de l'invention. Il s'agit donc d'un paquet relatif aux informations émanant d'une des stations de référence, ayant en charge la gestion de l'ensemble du système de transmission A.M.R.T. relatif au satellite considéré.

Un tel paquet comporte successivement :
- une partie 12 classiquement constituée par des bits nécessaires à la récupération de la fréquence porteuse et du rythme
- un "mot unique" 13, classique également, et servant à définir sans ambiguïté le début des informations utiles contenues dans le paquet
- une première partie utile 14 destinée aux canaux de service servant à la communication entre les opérateurs des stations de référence et les opérateurs des stations de trafic,
- une deuxième partie utile 15 destinée à l'émission de messages de gestion de trame ; ces messages permettent de donner l'ordre à une station de trafic donnée d'émettre un nouveau paquet dans la trame, soit en lui donnant le numéro de l'intervalle de temps dans lequel elle doit émettre le nouveau paquet (cas d'un canal vidéo), soit en lui donnant des informations sur la position précise dans le temps du début du paquet et sur la longueur de celui-ci (cas de canaux téléphoniques)
- une dernière partie utile 16 destinée à la transmission des messages de synchronisation des stations de trafic ; ces messages sont utilisés par chaque station de trafic pour positionner de façon exacte le début de chaque paquet de trafic par rapport au paquet de référence qu'elle reçoit, compte-tenu de la variation de la position géographique du satellite : on assure ainsi qu'il n'y ait pas, au niveau du satellite, de recouvrement entre les différents paquets émis par les différentes stations de trafic.

La figure 3 représente un paquet de signalisation, tel que le paquet 113 de la figure 1, transmis par le dispositif de l'invention. Il s'agit d'un paquet émis par une des stations de trafic, celle précisément qui désire l'établissement d'une demande de nouvelle communication, et qui est destiné à donner aux autres stations toutes les informations nécessaires en conséquence. Comme représenté schématiquement sur le dessin, un tel paquet comporte successivement :
- des parties classiques 17, 18, 19, relatives, respectivement, comme précédemment, à la récupération de fréquence porteuse et de rythme, au mot unique et aux canaux de service
- une première partie utile 20 destinée à transmettre les messages émis par les stations de trafic vers les stations de référence et concernant les demandes de nouvelles assignations et les demandes de réservations
- une seconde partie utile 21 destinée à transmettre les messages dits de synchronisation et ayant pour but de permettre à chaque station de rester synchronisée en l'absence de trafic.

La figure 4 représente schématiquement un paquet de trafic d'émission de canaux à bas débit, tel que l'un des paquets 101, 102 ou 103 de la figure 1. Il s'agit d'un paquet transmettant par exemple plusieurs canaux téléphoniques émis par une des stations de trafic.

Un tel paquet comporte successivement :
- des parties classiques 210, 22, 23, relatives, comme précédemment, respectivement à la récupération de la porteuse et du rythme, au mot unique et aux canaux de service,
- plusieurs parties utiles 24, 25,..., 26, contenant les données représentatives de différents canaux de téléphonie émis par la station considérée, et correspondant donc à diverses conversations téléphoniques en provenance d'abonnés différents.

La figure 5 représente schématiquement un paquet de trafic d'émission de vidéocommunications, conforme à l'invention.

Comme on l'a vu précédemment, un tel paquet a une longueur (durée) fixe L, calculée pour que ce paquet, tel que le paquet 7 de la figure 1, remplisse aux intervalles de garde (75, 76, figure 1) près, un des intervalles de temps fixes (61, 62, 63,...,6N) divisant la trame de l'invention, ce paquet et lesdits intervalles de temps étant par ailleurs tels qu'il transmette le signal de vidéocommunications de plus bas débit, par exemple 384 kilobits/sec.

Les intervalles de temps (61, 62,..., 6N, figure 1) et les paquets de transmission vidéo (7, 901 à 980, 81 à 84, figure 1) étant de durée fixe, l'assignation à la demande selon l'invention est très simplifiée par rapport à l'art antérieur. Chaque station n'a pas à définir pour chaque intervalle de temps, s'il s'agit d'un paquet vidéo, le début et la longueur du paquet : lorsqu'un intervalle de temps lui est alloué, elle peut émettre directement le paquet correspondant. Cependant, le débit correspondant n'étant pas nécessairement ajusté de façon précise à cette longueur, il faut ajuster la partie utile vidéo transmise dans ce paquet en fonction du débit réel émis par la station, ce qui explique que le paquet de la figure 5 comporte, après les premières parties classiques 27 (récupération de porteuse et de rythme), 28 (mot unique), et 29 (canaux de service) :

- une partie 30 d'indication de longueur (durée) de la partie utile vidéo (31) transmise dans ce paquet
- la partie utile vidéo (31) transmise dans ce paquet, partie qui est donc ajustable
- une partie 32 constituée par des bits de remplissage, par exemple un ensemble de bits I ou un ensemble de bits 0, servant uniquement à amener le paquet considéré à sa longueur fixe L.

Un des intérêts du procédé d'assignation à la demande de l'invention est de permettre la réalisation aisé d'un dispositif de télécommunications par satellite à gestion décentralisée. L'assignation à la demande se réalise dans ce cas directement dans une des stations de trafic sans intervention d'un centre de gestion. C'est alors la station qui reçoit un appel qui assure l'assignation directement, après transmission d'un message d'information vers l'ensemble des autres stations de trafic, et compte-tenu des messages de ce type reçus entre temps de ces autres stations.

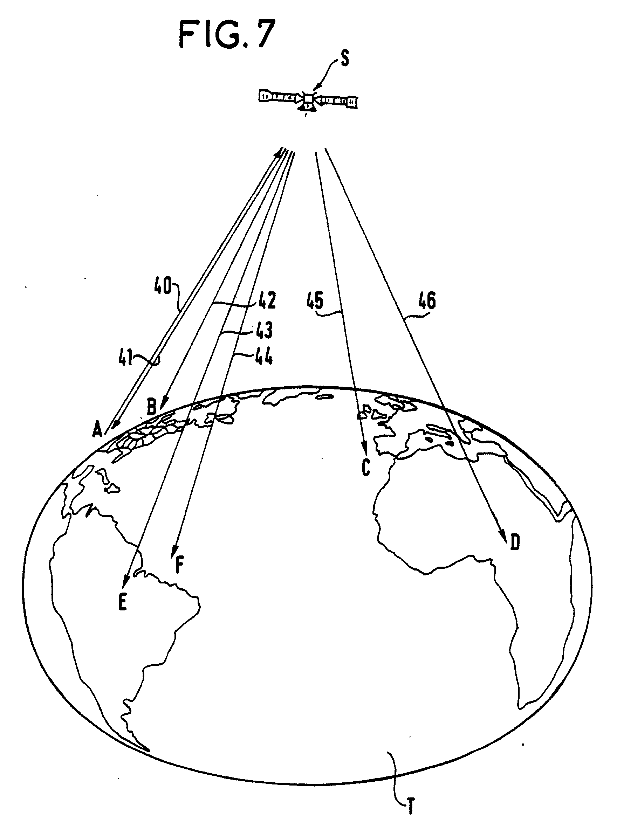

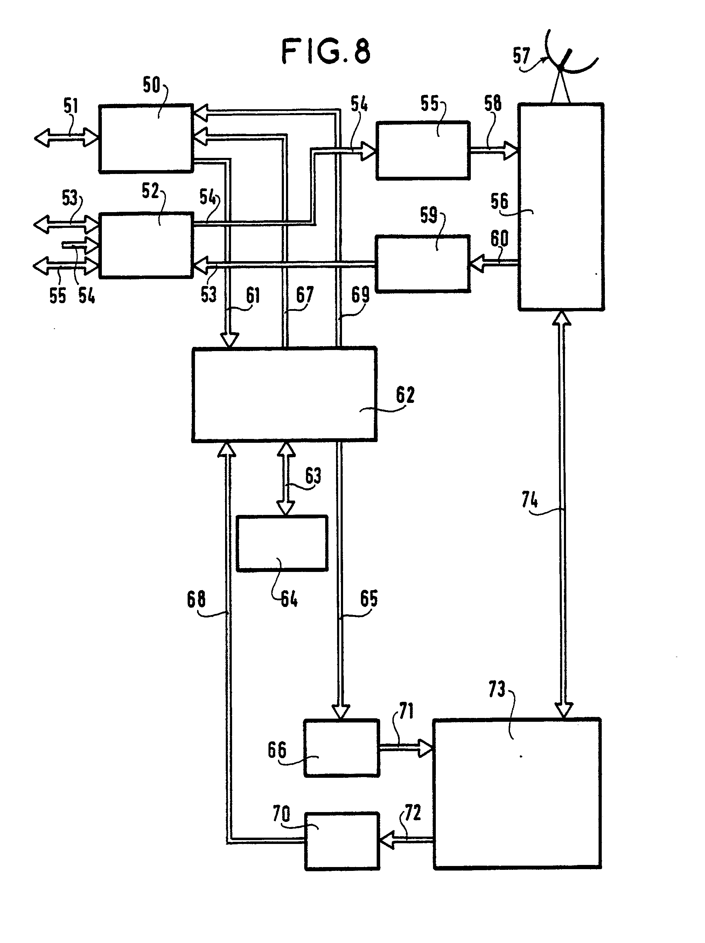

On décrira maintenant, à titre d'exemple de réalisation non limitatif, et en référence aux figures 7 et 8, un exemple de dispositif de télécommunications par satellite conforme à l'invention, avec assignation à la demande et gestion décentralisée.

Sur la figure 7, qui a un but purement illustratif, on a représenté schématiquement le globe terrestre T et le satellite géostationnaire S. Les stations de trafic ont été désignées par A, B, C, D, E, F. Les stations de référence, qui ne servent alors qu'à la synchronisation de l'ensemble, sont d'un modèle courant et n'ont pas été désignées sur le dessin.

Sur la figure 8 est représenté schématiquement un exemple de réalisation pratique de la station de trafic A, les autres stations de trafic B à E étant d'un modèle identique.

Conformément à l'invention, et dans le contexte d'une assignation à la demande décentralisée, c'est donc, dans l'exemple de la figure 7, la station A qui effectue directement l'assignation de nouveaux paquets, correspondant par exemple à une communication vidéo dont la demande en provenance du réseau terrestre vient de lui arriver, sans recevoir d'ordre du centre de gestion relié à l'une des stations de référence (non représentées).

Tel que représenté sur la figure 7, la station A émet donc vers le satellite S un signal 40 contenant un message d'indication d'adresse, indiquant les numéros des intervalles de temps, qu'elle a relevés comme disponibles dans la trame, qu'elle compte utiliser pour transmettre la nouvelle communication vidéo dont elle vient de recevoir l'appel.

Le satellite S retransmet alors, par les signaux 42 à 46, ce message d'indication d'adresse vers les stations de trafic B à E, et retransmet ce même message vers la station émettrice A par le signal 41.

Dans le cas où, au moment où la station A a reçu en retour du satellite son message d'indication d'adresse par le signal 41, et si elle n'a pas reçu dans l'intervalle émission-réception d'autres messages d'indication d'adresse lui indiquant que les intervalles de temps indiqués sont déjà demandés ou utilisés par une des autres stations de trafic, la station A va émettre directement les paquets prévus dans les intervalles de temps prévus par son message d'indication d'adresse. Dans le cas contraire, les intervalles de temps prévus sont indisponibles et la communication demandée n'est pas établie.

Chaque station de trafic dispose donc d'une table des numéros d'intervalles de temps disponibles à tout instant dans la trame A.M.R.T., qui est constamment remise à jour à l'aide des messages d'indication d'adresse qui lui parviennent à chaque instant en provenance des autres stations.

Par ailleurs, toute station de trafic émettant des messages d'indication d'adresse, le dispositif est nécessairement conçu, comme on le voit sur la figure 7, pour que ces messages soient reçus par toutes les stations, y compris celle qui les a émis. La station émettrice peut alors savoir au bout de combien de temps un tel message a été reçu par toutes les autres stations, le temps de transmission étant une des caractéristiques du système. Elle peut ainsi vérifier que ce message a été reçu correctement par celles-ci.

Dans le cas, évoqué ci-dessus, où la station émettrice du message d'indication d'adresse reçoit, entre son émission (40) et sa réception (41) par celle-ci, un autre message d'indication d'adresse, qui a donc été émis avant le sien par une autre station, elle doit modifier son assignation et en conséquence réémettre un message d'indication d'adresse modifié, ceci jusqu'à ce que l'établissement de la communication demandée via le réseau terrestre soit possible.

Sur la figure 8 on a désigné par la référence 50 le sous-ensemble constituant l'interface de signalisation avec le réseau terrestre, auquel il est relié par un bus 51, et qui peut être constitué par un réseau par câble, une antenne de faisceaux hertziens, une liaison directe avec un usager, etc...

C'est par ce sous-ensemble 50 qu'arrivent à la station A représentée sur la figure 8 les demandes d'établissement de communications et que sont émis vers l'usager les signaux de signalisation, telle qu'une sonnerie dans l'exemple d'une simple communication téléphonique.

La référence 52 désigne le sous-ensemble constituant l'interface de communication avec le réseau terrestre. De manière classique, on trouve donc dans ce sous-ensemble 52 les interfaces avec les câbles ou les faisceaux hertziens servant à la transmission des communications par les bus 53, 54, 55, etc...

Pour la télévision, le bloc 52 comporte par exemple des convertisseurs de standard permettant la transmission directe sur des canaux analogiques des signaux reçus en numérique du satellite. En réception, le bloc 52 assure les mêmes fonctions et permet la transformation en signaux numériques des signaux analogiques reçus en provenance des réseaux terrestres.

Du côté station arrivent dans le bloc 52 sur un premier bus 53 les signaux numériques en provenance du satellite, et partent du bloc 52 sur un second bus 54 les signaux de trafic reçus en provenance des canaux terrestres, ces signaux de trafic étant convertis en signaux numériques s'ils ont été reçus sous forme analogique.

Le bus 54 est relié à un bloc générateur de paquets 55, ayant pour rôle de créer les paquets, de les mettre en forme, et de les émettre vers le satellite par le dispositif radioélectrique 56 comportant les ensembles classiques de modulation, transposition de fréquence, etc..., qui permettent d'accéder à l'antenne d'émission 57. Le générateur de paquets 55 est relié au dispositif radioélectrique 56 par un bus 58.

De même, le bus 53 est relié à un bloc récepteur de paquets 59, lui même relié au bloc radiofréquences 56 par un bus 60, et qui a pour rôle de transformer les paquets de données reçus en provenance du satellite en trains numériques continus.

Du sous-ensemble logique 50 part, comme représenté, un bus 61 qui aboutit à un bloc logique 62 de contrôle et analyse des ressources, qui est un ordinateur ayant pour objet de mettre à jour et de contrôler l'état des intervalles de temps de trame pour la transmission satellite, et auquel est associé par le bus 63 une mémoire 64 de ces intervalles de temps, qui y sont classés en intervalles soit disponibles, soit occupés par des communications. La mémoire 64 est donc une mémoire dynamique des états des intervalles de temps de la trame A.M.R.T. de l'invention, et dont le rôle est de maintenir à jour à chaque instant une table des intervalles de temps fixes composant cette trame.

L'ordinateur 62 a pour rôle l'analyse des demandes d'établissement de communications venant du réseau terrestre par le bus 61 via l'interface 50, et l'examen des ressources possibles à l'aide de la table stockée dans la mémoire dynamique 64. Il est relié par un bus 65 à un générateur de messages d'indication d'adresse 66. Il a également pour rôle d'accepter ou de refuser les demandes de communications nouvelles. Ces acceptations ou ces refus sont transmis par le bus 67 vers l'interface 50. Comme déjà expliqué précédemment, ces décisions d'acceptation ou de refus sont liées à une analyse des ressources effectuée par l'ordinateur 62, et dépendent du nombre d'intervalles de temps disponibles dans la trame. Si ce nombre d'intervalles de temps est insuffisant, il y a refus d'établissement de la communication. S'il est suffisant et que l'on a par ailleurs reçu, par un bus 68, le message d'indication d'adresse en provenance du satellite qui autorise une génération des paquets, on envoie à l'usager, par le bus 67, l'interface 50, et le bus 51, un message d'acceptation qui va se traduire ensuite par l'établissement de la communication demandée.

L'ordinateur 62 est enfin relié à l'interface 50 par un bus 69 destiné à transmettre au réseau terrestre les demandes d'établissement de communications qui sont émises par une autre station de trafic. Il est en effet nécessaire que les intervalles de temps définis dans un message d'indication d'adresse en provenance d'une autre station et ceux existant dans les ressources du réseau terrestre de la station A soient mis en relation, ce qui implique que l'on expédie vers les usagers la demande correspondante en provenance de ladite autre station de trafic.

Les signaux reçus par l'intermédiaire du bus 68 proviennent d'un bloc logique 70 de réception et de traitement des messages d'indication d'adresse reçus du satellite.

Les blocs 66 et 70 sont reliés comme représenté pour les bus 71 et 72 à un bloc logique commun 73 chargé d'assurer la mise en forme des messages de signalisation sur un canal commun de signalisation du satellite qui est réalisé au moyen de l'un des paquets de signalisation à bas débit tel que le paquet 113 de la figure 1. Le bloc logique 73 est relié au dispositif radioélectrique 56 par un bus 74.

En résumé, la procédure décentralisée utilisée avec le dispositif de télécommunications par satellite qui vient d'être décrit est la suivante :

- chaque station de trafic met continuellement à jour la liste des états des intervalles de temps à chaque message reçu sur le canal de signalisation. De cette manière, elle connaît de manière précise les intervalles de temps libres à tout instant

- lorsqu'une station de trafic reçoit une demande de nouvelle communication en provenance d'un usager, elle émet vers les autres stations (figure 7) un message d'indication d'adresse contenant :
- les caractéristiques de la communication
- la désignation des trames et des numéros d'intervalles de temps qu'elle entend attribuer
- elle attend la réception (signal 41, figure 7) de son propre message, qui sert d'accusé de réception pour l'ensemble des stations impliquées (B à F, figure 7) :
  - si ce message est reçu sans ambiguïté et sans qu'un autre message émis par une autre station se soit intercalé, l'attribution des intervalles de temps est confirmé et la communication est établie,
  - si un autre message s'intercale avant sa réception, celui-ci à la priorité et le message de la station A doit être modifié avant réexpédition ; dans le cas où les ressources ne permettent plus l'établissement de la communication demandée, le message d'indication d'adresse correspondant doit être annulé ou retardé.
- La communication demandée est alors soit établie, soit retardée, soit refusée.

Il va de soi que l'invention n'est pas limitée au mode préférentiel de gestion décentralisée qui vient d'être décrit, et pourrait aussi bien être appliquée à un dispositif à gestion centralisée dans lequel l'organe effectuant l'assignation est situé dans un centre de gestion.

La procédure utilisée dans une telle gestion centralisée serait alors la suivante :
- Lorsqu'une station de trafic reçoit une demande en provenance d'un usager, elle émet un message de demande vers le centre de gestion via le satellite.

  Il peut alors s'agir :
  - d'une demande d'établissement de nouvelle communication à établir le plus rapidement possible
  - d'une demande de libération pour une communication établie en temps réel
  - d'une demande de réservation venant d'un usager pour une future communication dont les paramètres (instant d'établissement, durée,....) sont définis dans la demande.

  Ce message utilise :
  - soit un paquet spécifique de signalisation transmis par la station recevant la demande de l'usager
  - soit les voies de service d'un paquet de trafic existant et également transmis par ladite station.
- Le centre de gestion élabore alors la liste des intervalles de temps à affecter à la communication à établir, puis transmet celle-ci aux stations concernées :

  - stations de trafic impliquées dans la communication à établir
  - stations de référence.
- Le plan de temps est changé alors dans l'ensemble des stations concernées et en synchronisme, selon une procédure identique à celle actuellement utilisée sur le réseau A.M.R.T. INTELSAT ; à l'issue de cette procédure, chaque station dispose de l'autorisation d'émettre des paquets dans un certain nombre d'intervalles de temps, ou de recevoir des paquets dans un certain nombre d'autres intervalles de temps.
- la station de trafic concernée, qui dispose de toutes les caractéristiques des canaux à émettre peut alors :
  - définir les caractéristiques de chacun des paquets qu'elle doit émettre : position, longueur,...
  - introduire ces nouveaux paquets dans la trame désignée ; elle est libre de définir un instant de début d'émission en fonction de ses propres contraintes
  - arrêter l'émission de paquets suite à une demande de libération
- Les stations de réception se placent corrélativement en attente de réception dans les intervalles de temps désignés.

## Revendications

1. Procédé de télécommunication par satellite en accès multiple à répartition dans le temps (AMRT) du type utilisant l'assignation à la demande, communication par communication, pour toute nouvelle communication à établir ou à libérer, le débit à transmettre étant variable et connu du système pour chaque communication, caractérisé en ce que, la trame (AMRT) est formée d'au moins une trame élémentaire décomposée en N intervalles de temps (61, 62, 63.. .6N) égaux et de durée fixe, chacun desdits intervalles étant dimensionné pour transmettre, aux intervalles de garde près, le canal de communication à plus bas débit, un intervalle de temps (61) étant affecté à la transmission des canaux de service, et en ce que :
   - chaque station de trafic met continuellement à jour la liste des états des intervalles de temps à chaque message reçu sur le canal de signalisation, de manière à connaître de manière précise les intervalles de temps libres à tout instant
   - lorsqu'une première station de trafic (station A) reçoit une demande de nouvelle communication en provenance d'un usager, elle émet vers les autres stations un message d'indication d'adresse contenant :

. les caractéristiques de la communication ;

. la désignation des trames et des numéros d'intervalles de temps disponibles qu'elle entend attribuer ;

- elle attend la réception (signal 41, figure 7) de son propre message, qui sert d'accusé de réception pour l'ensemble des stations impliquées (B à F, figure 7) :

. si ce message est reçu sans ambiguité et sans qu'un autre message émis par une autre station se soit intercalé, l'attribution des intervalles de temps est confirmé et la communication est établie ;

. si un autre message s'intercale avant sa réception, celui-ci a la priorité et le message de la première station doit être modifié avant réexpédition

- dans le cas où les ressources ne permettent plus l'établissement la communication demandée, le message d'indication d'adresse correspondant doit être annulé ou retardé.

- dans le cas positif où la communication demandée est établie, on place chronologiquement les paquets à émettre à l'intérieur des intervalles de temps disponibles pour qu'ils soient correctement acheminés.

2. Procédé selon la revendication 1, caractérisé en ce que pour la transmission de canaux à bas débit on transmet dans un même paquet plusieurs canaux en provenance d'une même station, et on place plusieurs de ces paquets dans un même intervalle de temps de la trame élémentaire.

3. Procédé selon la revendication 1, caractérisé en ce que chaque canal de communication, qui correspond à un débit supérieur au débit minimal, est partagé à l'intérieur d'une même trame élémentaire, en plusieurs paquets répartis dans plusieurs intervalles de temps disponibles, quelle que soit leur place à l'intérieur d'une même trame élémentaire (81, 82, 83, 84), ces paquets transmettant, chacun, une partie de l'information par ce canal ; chaque paquet de trafic (81, 901, 7) correspondant à la transmission de tout ou partie d'un canal de communication ayant une longueur fixe et identique.

4. Dispositif de télécommunication par satellite, mettant en oeuvre le procédé selon l'une quelconque des revendications 1 à 3, caractérisé en ce que chacune desdites stations de trafic comporte :

- un dispositif radioélectrique (56) relié à un dispositif récepteur de paquets (59), à un dispositif générateur de paquets (55), et à un bloc (73) de mise en forme des messages de signalisation ;

- un dispositif (62) de contrôle et analyse des ressources relié à une mémoire dynamique (64) des états des intervalles de temps :

- un générateur (66) des messages d'indication d'adresse émis par la station ;

- un dispositif (70) de réception et traitement des messages d'indication d'adresse reçus par la station ;

- des interfaces (50, 52) de signalisation et de communication avec le réseau terrestre ;

- des dispositifs (55, 59) de génération et de réception des paquets.

**Claims**

1. A telecommunication method via a satellite of the time division multiple access type (T.D.M.A.) using call-by-call demand assignment for all new communications to be set up or to be cleared down, with the data rate to be transmitted being variable and known to the system for each call, characterized in that the frame (T.D.M.A.) is formed of at least one elementary frame decomposed into N equal time slots (61, 62, 63, .. 6N) of fixed duration, with each of said slots having a length adapted to transmit, when ignoring the guard bands, the communication channel having the lowest data rate, one time slot (61) being assigned to the transmission of the service channels, and in that

- each traffic station continuously updates the list of states of the time slots at each message received through the signalling channel, so as to know at any instant in a precise manner the idle time slots,

- when a first traffic station receives a new communication demand from a user, it transmits to the other stations an address indication message, containing:

. the characteristics of the call,

. the designation of the frames and the numbers of the available time slots which it intends to assign,

- it waits for receiving (signal 41, Figure 7) its own message which serves as an acknowledgment valuable for all of the stations involved (B to F, Figure 7):

. if said message is received unambiguously and provided that no other message transmitted by another station did interpose itself, the assignment of the time slots is confirmed and the communication is set up,

. if another message interposes itself prior to said reception, this message takes priority and the message of the first station must be modified prior to re-expedition,

- in the event that the resources are no longer capable of setting up the requested communication, the corresponding address indication message must be cancelled or delayed,
- in the affirmative case where the required communication is set up, the bursts to be transmitted are positioned chronologically within the available time slots so as to be conveyed correctly.

2. A method according to claim 1, characterized in that for the transmission of low data rate channels, a plurality of channels from a same station are transmitted in the same burst, and in that a plurality of these bursts are placed in a same time slot of the elementary frame.

3. A method according to claim 1, characterized in that each communication channel, which corresponds to a data rate higher than the minimum rate, is decomposed within a same elementary channel into a plurality of bursts distributed over a plurality of available time slots, regardless of their place within a same elementary frame (81, 82, 83, 84) with each of the bursts transmitting a portion of the information through said channel, and with each traffic burst (81, 901, 7) corresponding to the transmission of an entire communication channel or of a part of it having a fixed and identical length.

4. A satellite telecommunication arrangement adapted to implement the method according to any one of the claims 1 to 3, characterized in that each of said traffic stations comprises:
- a radio device (56) connected to a burst receiver device (59), to a burst generator device (55), and to a block (73) for shaping signalling messages,
- a device (62) for monitoring and analyzing resources, connected to a dynamic memory (64) for storing the status of the time slots,
- a generator (66) for generating the address indication messages which are emitted by the station,

- a device (70) for receiving and processing address indication messages received by the station,
- signalling and communication interfaces (50, 52) with the ground network, and
- devices (55, 59) for generating and receiving bursts.

**Patentansprüche**

1. Fernmeldeverfahren über einen Satelliten mit Mehrfachzugriff im Zeitmultiplex (TDMA), vom Typ der Zuweisung auf Anforderung für jede neu herzustellende oder freizugebende Verbindung, wobei die Übertragungsrate für jede Verbindung eine andere und das System bekannt ist, dadurch gekennzeichnet, daß der Rahmen (TDMA) aus mindestens einem Elementarrahmen besteht, der in N gleiche Zeitschlitze (61, 62, 63, ... 6N) fester Dauer unterteilt ist und jeder Zeitschlitz so bemessen ist, daß er, abgesehen von den Sicherheitsabständen, den Verbindungskanal mit der niedrigsten Übertragungsrate überträgt, wobei ein einzelner Zeitschlitz (61) der Übertragung der Servicekanäle zugewiesen ist, und daß:
- jede Verkehrsstation bei jeder über den Signalisationskanal empfangenen Nachricht die Liste der Belegzustände der Zeitschlitze aktualisiert, so daß zu jedem Zeitpunkt die freien Zeitschlitze genau bekannt sind,
- eine erste Verkehrsstation (Station A), wenn sie von einem Teilnehmer eine neue Verbindungsanforderung empfängt, an die anderen Stationen eine Adressenangabemeldung mit folgendem Inhalt sendet:
. Merkmale der Verbindung,
. Bezeichnung der verfügbaren Rahmen und der verfügbaren Zeitschlitznummern, die sie zuzuteilen beabsichtigt,
- sie den Empfang (Signal 41, Figur 7) ihrer eigenen Meldung erwartet, die für alle betroffenen Stationen (B bis F, Figur 7) als Empfangsbestätigung dient:
. wenn diese Meldung inhaltlich unzweideutig empfangen wurde und sich keine andere Meldung einer anderen Station dazwischengeschoben hat, wird die Zuweisung der Zeitschlitze bestätigt und die Verbindung hergestellt,
. wenn sich vor ihrem Empfang eine andere Meldung dazwischenschiebt, hat diese die Priorität, und die Meldung der ersten Station muß vor der erneuten Aussendung geändert werden;

- wenn die Betriebsmittel nicht mehr die Erstellung der verlangten Verbindung ermöglichen, die entsprechende Adressenanzeigemeldung annuliert oder verzögert werden muß,

- wenn dagegen die verlangte Verbindung erstellt wird, die zu sendenden Datenpakete chronologisch innerhalb der verfügbaren Zeitschlitze zur korrekten Beförderung angeordnet werden.

2. Verfahren nach Anspruch 1, dadurch gekennzeichnet, daß man zur Übertragung der Kanäle mit niedriger Übertragungsrate im gleichen Paket mehrere von einer gleichen Station herkommende Kanäle überträgt, und daß man mehrere dieser Pakete im gleichen Zeitschlitz des Elementarrahmens unterbringt.

3. Verfahren nach Anspruch 1, dadurch gekennzeichnet, daß jeder Verbindungskanal, der einer höheren Übertragungsrate als der Minimalrate entspricht, innerhalb des gleichen Elementarrahmens in mehrere Pakete unterteilt wird, die auf mehrere verfügbare Zeitschlitze verteilt sind, unabhängig von ihrem Platz innerhalb eines selben Elementarrahmens (81, 82, 83, 84), wobei jedes dieser Pakete einen Teil der Information über diesen Kanal überträgt und jedes der Übertragung des gesamten Verbindungskanals oder eines Teils davon entsprechende Verkehrspaket (81, 901, 7) eine gleichbleibende und identische Länge besitzt.

4. Satellitenfernübertragungseinrichtung zur Durchführung des Verfahrens nach einem beliebigen der Ansprüche 1 bis 3, dadurch gekennzeichnet, daß jede der Verkehrsstationen aufweist:

- eine funkelektrische Einrichtung (56), die mit einer Paketempfangsvorrichtung (59), einer Paketgeneratorvorrichtung (55), und einen Block (73) für die Formatierung der Signalisationsmeldungen verbunden ist,

- eine Steuer- und Analyseeinrichtung (62) der Betriebsmittel, die mit einem dynamischen Speicher (64) zur Speicherung der Zeitschlitzbelegungen verbunden ist,

- einen Generator (66) zur Erzeugung der von der Station gesendeten Adressenangabenmeldungen,

- eine Empfangs- und Verarbeitungseinrichtung (70) für die von der Station empfangenen Adressenangabemeldungen,

- Signalisations- und Verbindungsschnittstellen (50, 52) mit dem erdgebundenen Netz,

- Erzeugungs- und Empfangseinrichtungen (55, 59) für die Pakete.

FIG.1

FIG.2

FIG.3

FIG.4

FIG.5

FIG.6

# FIG. 7

# FIG.8